# FASCICULE DE BREVET EUROPEEN

(11) **EP 3 538 609 B1**
(45) Date de publication et mention de la délivrance du brevet: **23.03.2022**
(21) Numéro de dépôt: 17801080.7
(22) Date de dépôt: 03.11.2017
(51) Int. Cl.: C08L 27/06, E04F 13/18, E04F 15/16, C08L 23/08, C08L 75/04, C08L 9/02, C08L 15/00, C08K 3/00

(54) **REVÊTEMENT DE SOL PVC A FAIBLE ÉMISSION DE FUMÉES TOXIQUES**
PVC BODENBESCHICHTUNG MIT NIEDRIGER EMISSION GIFTIGER DÄMPFE
PVC FLOOR COVERING WITH A LOW EMISSION OF TOXIC FUMES

(30) Priorité: 10.11.2016 FR 1660878
(43) Date de publication de la demande: 18.09.2019
(60) Demande divisionnaire: 22155451.2
(73) Titulaire: GERFLOR, 69100 Villeurbanne (FR)
(72) Inventeur: LOUISY, Jérémie, 38490 Aoste (FR)
(74) Mandataire: Cabinet Laurent & Charras
(86) Numéro de dépôt international: PCT/FR2017/053011
(87) Numéro de publication internationale: WO 2018/087453

(56) Documents cités:
- WO-A1-93/13169
- CN-A- 105 885 302
- FR-A1- 2 675 178
- JP-A- S62 185 732
- JP-A- 2002 194 162
- US-A1- 2012 282 432

## Description

### DOMAINE TECHNIQUE

La présente invention concerne le secteur technique des revêtements de sols et murs pouvant se présenter sous la forme d'un rouleau ou bien se présenter sous la forme d'un panneau, d'une dalle, d'une lame, ou similaire.

L'invention concerne notamment un revêtement de sol résistant au trafic pour des véhicules de transport de personnes comprenant du polychlorure de vinyle (PVC) présentant un faible taux d'émission de fumées toxiques tout en conservant de bonnes propriétés de résistance au trafic et de souplesse. Le revêtement de sol selon l'invention peut consister en une couche pour former un revêtement de sol homogène ou plusieurs couches liées entre elles pour former un revêtement de sol hétérogène.

L'invention se propose de diminuer la toxicité des fumées - en particulier les émissions d'acide chlorhydrique - produites par les revêtements de sol PVC au cours d'un incendie. Ces émissions toxiques constituent un obstacle majeur à l'utilisation de revêtements de sols PVC pour des véhicules de transport de personnes où les exigences en matière d'émission de fumées toxiques sont strictes.

### ART ANTERIEUR

Il est connu de l'art antérieur que les revêtements de sol PVC, du fait de leur composition, émettent de grandes quantités d'acide chlorhydrique au cours d'un incendie.

Pour remédier à cet inconvénient, les fabricants de revêtements de sols ont développé différentes compositions permettant de limiter les émissions de fumées toxiques, notamment en piégeant l'acide chlorhydrique émis et/ou en incorporant des agents ignifugeants pour limiter la propagation de la flamme lors de la combustion du revêtement.

La demande de brevet européenne EP 0950688 A1, propose notamment un revêtement de sol PVC dont la composition comprend un grade fin d'hydroxyde de magnésium, connu pour être à la fois ignifugeant et piégeur d'acide chlorhydrique. Une partie du PVC est également remplacée par du polyvinyl butyral afin de réduire les émissions toxiques. Cependant, l'ajout de polyvinyl butyral limite les possibilités d'incorporation d'additifs, notamment de charges ou encore d'agent ignifugeants et oblige à augmenter la quantité de plastifiants liquides dans la composition. Cette augmentation de la quantité de plastifiants liquides n'est cependant pas souhaitable car elle augmente les risques d'exsudation de la composition et diminue ainsi sa stabilité dans le temps. Le revêtement de sol obtenu présente ainsi une faible résistance à l'usure et se trouve être cassant due à sa rigidité.

Une alternative consiste à utiliser une autre résine que le PVC dans la composition du revêtement de sol. Le brevet US 5700865 déposé par la société Tarkett AG propose un revêtement de sol sans halogène (sans PVC), composé d'un mélange de copolymère éthylène/octène, de polypropylène, d'un copolymère réticulé d'éthylène et de silane insaturé, d'une charge organique de type polyéthylène, d'un ignifugeant. Cependant, le revêtement de sol proposé n'atteint pas les propriétés d'un revêtement de sol PVC en terme de résistance à l'usure, de souplesse, de vieillissement et de nettoyabilité.

FR 2675178 A1 décrit une matière plastique pour la réalisation de sols qui comprend du PVC, une résine compatible avec le PVC, de préférence un copolymère EVA, des plastifiants, des agents ignifugeants et une charge minérale.

JP 2002 194162 A décrit une composition pour la fabrication des sols qui contient 100 parties d'une résine PVC, 80 parties d'un terpolymère éthylène / acrylate / monoxyde de carbone, 30 parties du tri-n-octyl ester de l'acide triméllitique et 150 parties du carbonate de calcium. La composition ne comprend ni d'agents ignifugeants ni des synergistes et/ou suppresseurs de fumées.

L'utilisation des agents de synergie ou d'un suppresseur de fumées comme partie du système ignifugeant est décrite par exemple dans US 2012/0282432 A1. Ces compositions comprennent également un plastifiant phosphate.

### EXPOSE DE L'INVENTION

L'un des buts de l'invention est donc de proposer un revêtement de sols permettant d'atteindre des niveaux de classement comparables à des revêtements PVC classiques en termes de résistance à l'usure, de souplesse, de vieillissement, de nettoyabilité tout en garantissant de faibles émissions de fumées toxiques lors d'un incendie, plus particulièrement d'émissions d'acide chlorhydrique. Un des buts de l'invention est également d'obtenir un revêtement de sol présentant une toxicité faible lors d'un incendie.

A cet effet, il est proposé un revêtement de sol tel que défini dans la revendication 1 comprenant au moins une couche principale dont la composition comprend du polychlorure de vinyle, un plastifiant, le plastifiant étant composé au moins en partie d'un plastifiant polymérique au moins en partie miscible avec le polychlorure de vinyle.

Le plastifiant utilisé selon l'invention peut donc être composés de plusieurs plastifiants dont au moins un est un plastifiant polymérique.

Selon l'invention, le plastifiant polymérique est une substance ayant à la fois le rôle de plastifiant du revêtement de sol, celui-ci remplace pour partie le plastifiant non polymérique traditionnellement utilisé, par exemple le DIDP ou le DPO, et également celui de liant organique, lequel peut se substituer partiellement au PVC. La substitution du PVC par le plastifiant polymérique permet ainsi de réduire les émissions d'acide chlorhydrique lors d'un incendie, tout en augmentant la souplesse et en conservant une bonne résistance au trafic. Le plastifiant polymérique est donc choisi pour être miscible voire semi-miscible au PVC. Le plastifiant polymérique permet donc de flexibiliser le revêtement de sol ce qui permet alors l'ajout d'une quantité plus importante d'additifs, notamment de charges ou encore d'agent ignifugeants. Le plastifiant polymérique est donc un modificateur de résine PVC qui permet de le flexibiliser tout en conservant de bonnes propriétés mécaniques.

ladite composition comprend en outre au moins un agent ignifugeant.

Avantageusement, ladite composition comprend entre 10 et 150 parts pour 100 parts en poids de polychlorure de vinyle (PCR) de plastifiant polymérique, préférentiellement entre 50 et 100 PCR de plastifiant polymérique.

Avantageusement, la valeur de température de transition vitreuse (Tg) du plastifiant polymérique est comprise entre - 80°C et 0°C préférentiellement entre -60°C et -15°C. De cette manière, la température de transition vitreuse de la composition comprenant du PVC et un plastifiant composé au moins en partie d'un plastifiant polymérique est plus basse que la température de transition vitreuse du PVC seul. La composition ainsi obtenue est particulièrement adaptée en terme de souplesse et de résistance attendue pour un revêtement de sol.

Le plastifiant polymérique est choisi parmi l'éthylène / acétate de vinyle / monoxyde de carbone (EVA/CO) et l'éthylène / acrylate / monoxyde de carbone.

Ladite composition comprend entre 1 et 60 PCR de plastifiant non polymérique, par exemple des plastifiants traditionnels du PVC incorporés sous forme liquide dans la composition. La quantité de plastifiants non polymérique présents dans la composition est donc réduite par rapport à une composition classique de revêtement de sol à base de PVC.

Selon l'invention, le ou les plastifiants qui ne sont pas des plastifiants polymériques est/sont choisi(s) parmi le Diisononyl Phtalate (DINP), le Diisodecyl Phtalate (DIDP), le 2-Ethylhexyl Diphényle Phosphate (DPO), le Téréphtalate dioctylique (DOTP), le 1,2-cyclohexane dicarboxylique acide diisononyl ester (DINCH), les plastifiants de la famille des benzoates, les plastifiants de la famille des adipates, les plastifiants commercialisés sous la Marque PEVALEN^{®} par la société Perstorp, l'huile de soja epoxydée (HSE), les plastifiants totalement ou partiellement biosourcés comme par exemple les plastifiants de la gamme polysorb^{®} ID 37 commercialisés par la société Roquette Pharma, les plastifiants de la gamme citrofol commercialisés par la société Jungbunzlauer International AG, ou encore les plastifiants de la gamme soft-n-safe commercialisés par la société Danisco. Ces plastifiants sont généralement incorporés sous forme liquide dans le dry-blend (mélange sec) préparé pour la réalisation de granulés à base de PVC, par exemple par extrusion.

Selon un mode de réalisation particulier, le revêtement de sol selon l'invention ne comprend que ladite couche principale de manière à former un revêtement de sol homogène.

Selon un mode de réalisation particulier, ladite couche principale comprend une face, laquelle face est lié à au moins une couche d'envers. De cette manière, il est obtenu un revêtement de sol hétérogène.

Avantageusement, ladite composition comprend entre 0% et 90% en poids de charge par rapport au poids de la couche principale, et avantageusement entre 10% et 60% en poids de charge par rapport au poids de la couche principale. La présence de plastifiant polymérique permet notamment l'incorporation d'une grande quantité de charges sans dégrader le comportement du revêtement de sol obtenu en terme de souplesse et de résistance. Les charges pouvant être utilisées sont notamment des charges inorganiques, par exemple des argiles, de la silice, du kaolin, du talc, du carbonate de calcium.

Les agents ignifugeants peuvent notamment être de la famille des oxydes métalliques tel que l'oxyde d'antimoine ainsi que des composés de la famille des hydroxydes métalliques parmi lesquels le tri hydroxyde d'aluminium (ATH), la boehmite (AOOH), le di hydroxyde de magnésium (MDH), l'hydromagnésite ou le mélange d'hydromagnésite et d'huntite . Ces agents ignifugeants peuvent être utilisés pur ou en mélange. Des mélanges connus sont par exemples l'ATH en combinaison avec le MDH, ce mélange permettant un effet sur une gamme de température plus étendue.

Ladite composition comprend entre 5% et 65% en poids d'agents ignifugeants par rapport au poids de la couche principale.

Ladite composition comprend des agents de synergie et/ou suppresseurs de fumées.

Les agents de synergie et/ou suppresseurs de fumées sont notamment des composés de la famille des oxydes et/ou hydroxydes métalliques tels que l'oxyde de magnésium, l'oxyde de zinc, le stannate de zinc, hydroxy stannate de zinc, le molybdate de zinc, le molybdate de calcium, le molybdate de calcium et de zinc. Ces agents de synergie et/ou suppresseurs de fumées peuvent être utilisés pur ou en mélange. Les agents de synergie et/ou suppresseurs de fumées ne sont généralement efficaces que lorsqu'ils sont associés à un ou des agent(s) ignifugeant(s) dont ils renforcent l'effet ou complémentent l'action.

Ladite composition comprend entre 0,5% et 8% en poids d'agents de synergie et/ou suppresseurs de fumées par rapport au poids de la couche principale.

Avantageusement, la composition de la couche principale selon l'invention comprend un mélange d'agents ignifugeant et d'agents de synergie et/ou suppresseurs de fumée comprenant au moins un oxyde métallique et un hydroxyde métallique.

Sans sortir du cadre de l'invention, les revêtements de sols selon l'invention peuvent consister en une couche principale pour former un revêtement de sol homogène ou comprendre plusieurs couches dont au moins une couche principale, les couches étant liées entre elles pour former un revêtement de sol hétérogène. La couche principale peut bien évidemment être liée entre deux couches.

Les revêtements de sols selon l'invention peuvent se présenter sous la forme d'un rouleau ou bien se présenter sous la forme d'un panneau, d'une dalle, d'une lame, ou similaire. Les revêtements de sols peuvent également être découpés selon des motifs définis afin de former des logos ou des kits adaptés aux sols d'un véhicule transportant des personnes. Les revêtements de sols selon l'invention peuvent se présenter sous la forme de panneaux ou de dalles dont les bords sont usinés pour présenter des moyens d'assemblage male/femelle permettant de relier plusieurs dalles ou panneaux entre eux.

De façon non limitative, les revêtements de sols selon l'invention pourront être réalisés par tout procédé connu, notamment par calandrage, extrusion, pressage, lamination, collage à chaud ou à froid ou encore enduction.

De façon non limitative, les revêtements de sols selon l'invention pourront comprendre une sous-couche liée à la couche d'envers ou à la couche principale et destinée à être en contact avec le sol.

Cette sous-couche peut notamment être une sous-couche textile si le revêtement se présente en rouleau. De façon plus générale, cette sous-couche peut également être une sous-couche moussée, une sous-couche adhésivée, une sous-couche comprenant des capteurs ou des moyens de chauffage.

Des sous-couches textile sont par exemples des sous-couches textile tissées ou non-tissées. Une sous-couche adhésivée peut notamment présenter une face d'envers enduite d'un adhésif afin de faciliter la pose du revêtement de sol.

De façon non limitative, les revêtements de sols selon l'invention pourront être grainés et/ou recouvert d'un vernis en surface, la surface étant la face de la couche destinée à être en contact avec l'utilisateur.

### DESCRIPTION SOMMAIRE DES FIGURES

D'autres avantages et caractéristiques ressortiront mieux de la description qui va suivre, donnée à titre d'exemple non limitatif, en référence aux figures annexées dans lesquelles :
- la figure 1 illustre, de manière schématique une vue en coupe d'un revêtement de sol hétérogène selon l'invention ;
- la figure 2 illustre, de manière schématique une vue en coupe d'une variante de réalisation d'un revêtement de sol hétérogène selon l'invention ;
- la figure 3 illustre, de manière schématique une vue en coupe d'une alternative de réalisation d'un revêtement de sol hétérogène selon l'invention ;

### DESCRIPTION DETAILLEE DE L'INVENTION

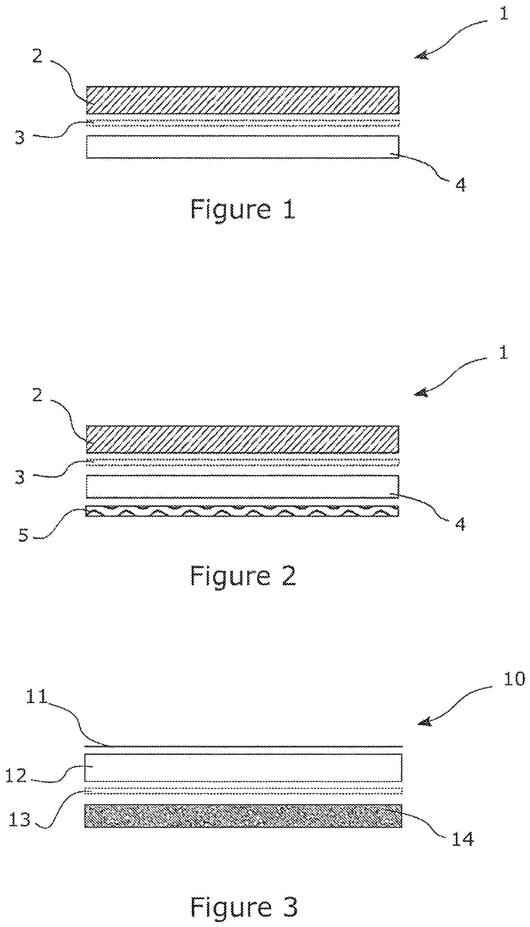

En référence à la figure 1, le revêtement de sol (1) hétérogène réalisé en rouleau comprend :
- une couche d'usure (2) ;
- une grille de verre (3) ;
- une couche d'envers (4).

L'épaisseur de ce revêtement de sol (1) est de 2,5 mm environ. La couche d'usure (2) est obtenue par un procédé de pressage classique utilisant des granulés à base de PVC. Plusieurs couches d'usure sont réalisées à partir de granulés de compositions différentes. Ces compositions sont détaillées dans le tableau 1 ci-dessous. Les valeurs dans ce tableau sont toutes données en parts pour cent de résine PVC (PCR) et en pourcentage du poids total de la couche d'usure. La couche d'usure (2) correspond à la couche principale selon l'invention.

Les aides procédé (« processing aids » en langue anglaise) correspondent à un mélange de stabilisants et/ou de lubrifiants pouvant varier selon les formules et bien connus de l'homme du métier.

**Tableau 1**

| | **CU-REF** | | **CU-TPU100** | | **CU-TPU60** | | **CU-EVA100** | | **CU-EVA60** | | **CU2-EVA60** | |
|---|---|---|---|---|---|---|---|---|---|---|---|---|
| | **PCR** | **%** | **PCR** | **%** | **PCR** | **%** | **PCR** | **%** | **PCR** | **%** | **PCR** | **%** |
| **Résine PVC** | 100 | 39,1 | 100 | 26,4 | 100 | 32,2 | 100 | 26,4 | 100 | 32,2 | 100 | 32,0 |
| **Plastifiant Polymérique : TPU** | | | 100 | 26,4 | 60 | 19,3 | | | | | | 0,0 |
| **Plastifiant Polymérique : EVA/CO** | | | | | | | 100 | 26,4 | 60 | 19,3 | 60 | 19,2 |
| **Aides procédé** | 3,2 | 1,3 | 10 | 2,6 | 10 | 3,2 | 10 | 2,6 | 10 | 3,2 | 6,25 | 2,0 |
| **Plastifiant non polymérique : DPO** | 45,0 | 17,6 | 10 | 2,6 | 10 | 3,2 | 10 | 2,6 | 10 | 3,2 | 15 | 4,8 |
| **Agents ignifugeants et agents de synergie et/ou suppresseurs de fumées** | 45,4 | 17,8 | 67,3 | 17,8 | 55,1 | 17,8 | 67,3 | 17,8 | 55,1 | 17,8 | 55,5 | 17,8 |
| **Charge** | 61,8 | 24,2 | 91,6 | 24,2 | 75,0 | 24,2 | 91,6 | 24,2 | 75,0 | 24,2 | 75,5 | 24,2 |

Une couche d'usure de référence (CU-REF), est réalisée selon une formule de granulés à base de PVC ignifugé. La couche (CU-REF) est pressée de manière à présenter une épaisseur d'environ 1,3mm.

Deux couches d'usures comparatives incorporant du TPU (CU-TPU100 et CU-TPU60) sont réalisées à partir d'un mélange de résine PVC et de TPU.

Trois couches d'usures incorporant de l'EVA/CO (CU-EVA100, CU-EVA60, CU2-EVA60) sont réalisées à partir d'un mélange de résine PVC et d'éthylène / acétate de vinyle / monoxyde de carbone (EVA/CO).

Avantageusement, la couche d'usure (2) est obtenue à partir d'un mélange de granulés parmi les formules (CU-TPU100, CU-TPU60, CU-EVA100, CU-EVA60, CU2-EVA60) définies selon le tableau 1. De façon conventionnelle, ces granulés peuvent être colorés avec des pigments de couleurs différentes de manière à obtenir une décor non uniforme et suggérant un aspect minéral.

La couche d'usure (2) peut également comprendre un mélange de granulés parmi les formules (CU-TPU100, CU-TPU60, CU-EVA100, CU-EVA60, CU2-EVA60) et de granulés d'une autre formule, notamment des granulés de PVC classique, dans la mesure ou la proportion de granulés classiques n'augmente pas trop les émissions toxiques de la couche ainsi formée. Un exemple de réalisation peut notamment consister en une couche d'usure obtenue à partir d'un mélange comprenant au moins 90% de granulés selon la composition de la couche principale selon l'invention, par exemple parmi les formules (CU-TPU100, CU-TPU60, CU-EVA100, CU-EVA60, CU2-EVA60) selon le tableau 1 et de 10% de granulés d'une formule classique à base de PVC.

La couche d'envers (4) est obtenue par calandrage. Cette couche est une couche de formule classique, à base de PVC, et comprend notamment environ 150 PCR de carbonate de calcium (Pour Cent de Résine PVC), environ 50 PCR de DIDP ainsi que des aides procédé. La couche d'envers présente une épaisseur comprise entre 1mm et 1,15mm.

La couche d'usure (2), la grille de verre (3) et la couche d'envers (4) sont complexées ensemble pour les lier.

Des tests ont été réalisés selon la norme EN 45545-2 (Avril 2013) et la méthode d'essai selon la norme ISO 5659-2 (décembre 2012) permettant la détermination de la densité optique et de la toxicité des fumées en enceinte unique sur le revêtement de sol (1) selon la figure 1 avec les différentes couche d'usure. Ces tests sont réalisés sur support contre-plaqué M1. L'échantillon testé est collé sur le support à l'aide d'une colle SIMSON ISR 70-07 à 300g/m² commercialisée par la société Bostik. Les résultats de ces tests sont résumés dans le tableau 2 ci-dessous. Dans le tableau 2, l'échantillon est désigné par le type de couche d'usure présent sur le revêtement de sol hétérogène testé. Les couches d'envers et les grilles de verre étant similaires pour tous les échantillons testés dans ce tableau.

**Tableau 2**

| **Couche d'usure** | **Ds(max)** | **Ds(4)** | **VOF4** | **I.T.C.g (4 minutes)** | **I.T.C.g (8 minutes)** |
|---|---|---|---|---|---|
| **CU-REF** | 200 | 182 | 375 | 0,46 | 0,71 |
| **CU-EVA100** | 207 | 190 | 330 | 0,19 | 0,30 |
| **CU-TPU100** | 228 | 222 | 424 | 0,24 | 0,34 |
| **CU-EVA60** | 207 | 186 | 270 | 0,24 | 0,36 |
| **CU-TPU60** | 191 | 186 | 393 | 0,28 | 0,44 |

Avec :
- Ds(max) : Densité optique spécifique maximale obtenue au cours de l'essai
- Ds(4) : Densité optique spécifique de la fumée à 4 minutes d'essai
- VOF4 : Valeur cumulée de la densité optique spécifique dans les 4 première minutes de l'essai
- I.T.C.g (4 minutes et 8 minutes) : Indice de toxicité conventionnel à 4 et 8 minutes

Les résultats observés permettent de montrer une très faible toxicité des fumées émises lors de la combustion des revêtements de sol comprenant un couche d'usure CU-EVA100, CU-EVA60, . En effet, la valeur de d'I.T.C.g à 4 ou 8 minutes est très inférieure à 0,9 ; 0,9 étant la limite fixée par le niveau HL2 de la norme EN 45545-2 (Avril 2013). La toxicité des revêtements de sols selon l'invention est en-outre particulièrement réduite en comparaison avec la référence CU-REF.

En référence à la figure 2, une variante du revêtement de sol (1) hétérogène réalisé en rouleau selon l'invention comprenant une sous-couche textile comprend :
- une couche d'usure (2) ;
- une grille de verre (3) ;
- une couche d'envers (4) ;
- une sous-couche (5) textile non tissé.

L'épaisseur de ce revêtement de sol (1) est de 2,6 mm environ pour une masse surfacique de 3.2kg/m² environ.

Deux exemples de couches d'usure (2) sont obtenus par un procédé de pressage classique utilisant des granulés à base de PVC selon les compositions CU-REF et CU2-EVA60 selon le tableau 1 ci-dessus. La couche d'usure (2) correspond à la couche principale selon l'invention.

La composition de la couche d'envers (4) est similaire à la couche décrite selon la figure 1 à savoir une couche à base de PVC ignifugé, et comprenant notamment environ 150 PCR de carbonate de calcium, environ 50 PCR de DIDP ainsi que des aides procédé, son épaisseur est cependant réduite à 0,65mm environ.

La sous-couche textile (5) est obtenue à partir d'un textile non-tissé de polyester.

La couche d'usure (2), la grille de verre (3) et la couche d'envers (4) sont complexées ensemble pour les lier. La sous-couche textile (5) est complexée à chaud à la couche d'envers (4).

Des tests ont été réalisés selon la norme EN 45545-2 (avril 2013) et la méthode d'essai selon la norme ISO 5659-2 (décembre 2012) permettant la détermination de la densité optique et de la toxicité des fumées en enceinte unique sur le revêtement de sol (1) selon la figure 2 avec les différentes couches d'usure CU-REF et CU2-EVA. Ces tests sont réalisés sur support contre-plaqué M1. L'échantillon testé est collé sur le support à l'aide d'une colle SIMSON ISR 70-07 à 300g/m² commercialisée par la société Bostik. Les résultats de ces tests sont résumés dans le tableau 3 ci-dessous.

**Tableau 3**

| **Couche d'usure** | **Ds(max)** | **Ds(4)** | **VOF4** | **I.T.C.g (4 minutes)** | **I.T.C.g (8 minutes)** |
|---|---|---|---|---|---|
| **CU-REF** | 236 | 216 | 572 | 0,84 | 1,16 |
| **CU2-EVA60** | 236 | 206 | 456 | 0,49 | 0,88 |

Avec :
- Ds(max) : Densité optique spécifique maximale obtenue au cours de l'essai
- Ds(4) : Densité optique spécifique de la fumée à 4 minutes d'essai
- VOF4 : Valeur cumulée de la densité optique spécifique dans les 4 première minutes de l'essai
- I.T.C.g (4 minutes et 8 minutes) : Indice de toxicité conventionnel à 4 et 8 minutes

Contrairement à la référence CU-REF, le revêtement de sol comprenant un couche d'usure CU2-EVA60 est conforme au niveau HL2, la valeur de d'I.T.C.g à 4 ou 8 minutes de ce dernier étant inférieure à 0,9; 0,9 étant la limite fixée par le niveau HL2 de la norme EN 45545-2 (Avril 2013). Les résultats observés permettent de montrer une faible toxicité des fumées émises lors de la combustion du revêtement de sol comprenant un couche d'usure CU2-EVA60.

En référence à la figure 3, une variante de revêtement de sol (10) hétérogène selon l'invention comprenant :
- un vernis (11) appliqué sur une couche d'usure (12) ;
- un film PVC imprimé (13) pour présenter un décor;
- une couche d'envers (14).

Ce revêtement de sol (10) est avantageusement réalisé en dalle ou en lame.

La couche d'usure à la particularité d'être obtenue à partir d'une composition comprenant du polychlorure de vinyle et un plastifiant composé au moins en partie d'un plastifiant polymérique au moins en partie miscible avec le polychlorure de vinyle. La couche d'usure obtenue ne comprend pas de charges ni d'agents ignifugeants, de manière à être transparente. Ainsi, le film PVC imprimé (13) est visible au travers de la couche d'usure (12). La couche d'usure (12) correspond à la couche principale selon l'invention.

La couche d'envers (14) est obtenue à partir d'une composition comprenant du polychlorure de vinyle, un plastifiant traditionnel non polymérique, de la charge et au moins un agent ignifugeant.

Dans un exemple comparatif, deux couches d'usure (12) dénommées CU3-REF et CU3-TPU sont réalisées. Ces couches d'usure (12) sont recouvertes d'une dizaine de grammes par m² d'un vernis classique.

La composition de la couche d'usure CU3-TPU comprend 100 PCR de résine PVC, 35 PCR de plastifiant non polymérique (DIDP), 60 PCR de TPU et 6 PCR d'aides procédé.

La composition de la couche d'usure CU3-REF comprend 100 PCR de résine PVC, 35 PCR de plastifiant non polymérique (DINP), et 6 PCR d'aides procédé. La couche d'usure présente une épaisseur de 0,55mm.

Dans cet exemple de réalisation, le film imprimé (13) est un film PVC d'une masse surfacique de 100 g/m² environ.

Dans cet exemple de réalisation, la composition de la couche d'envers (14) comprend 100 PCR de résine PVC, 105 PCR de charges, 70PCR d'agent ignifugeants et agents de synergie et/ou suppresseurs de fumées, 33 PCR de DIDP, et 7 PCR d'aides procédé. La couche d'envers présente une épaisseur de 1,37 mm.

La couche d'envers (14), le film imprimé (13) et la couche d'usure (12) sont liées ensemble pour former un revêtement de sol.

Des tests ont été réalisés selon la norme IMO FTP code 2010 / MSC 307(88) partie 2 (fumée et toxicité) permettant la détermination de la densité optique et de la toxicité des du revêtement de sol (10) selon la figure 3 avec les différentes couches d'usures (CU3-REF, CU3-TPU). Dans le tableau 4 ci-dessous, l'échantillon est désigné par le type de couche d'usure présent sur le revêtement de sol hétérogène testé. Les couches d'envers et les films étant similaires pour tous les échantillons testés dans ce tableau.

**Tableau 4 (valeurs en ppm)**

| | CU3-REF | | CU3-TPU | |
|---|---|---|---|---|
| | 25kW/m2 avec flamme pilote | 50kW/m2 sans flamme pilote | 25kW/m2 avec flamme pilote | 50kW/m2 sans flamme pilote |
| Densité Optique de la fumée | 335 | 452 | 340 | 599 |
| Monoxide de carbone (CO) | 969 | 835 | 841 | 724 |
| Chlorure d' Hydrogène (HCl) | 3046 | 3468 | 2251 | 2711 |
| Bromure d'hydrogène (Hbr) | 0 | 0 | 0 | 0 |
| Fluorure d'hydrogène (HF) | 0 | 0 | 0 | 0 |
| Cyanure d'hydrogène (HCN) | 0 | 0 | 19 | 0 |
| Oxydes d'azote (NOx) | 0 | 0 | 12 | 0 |
| Dioxyde de soufre (SO2) | 0 | 0 | 0 | 0 |

Les résultats observés montrent que la toxicité des revêtements de sols selon l'invention est particulièrement réduite en comparaison avec la référence.

Afin de réduire encore la toxicité des fumées émises lors de la combustion, il pourra notamment être envisagé de modifier la composition de la couche d'envers (14) selon la composition de la couche principale selon l'invention. A titre d'exemple les formules ( CU-EVA100, CU-EVA60, CU2-EVA60) précédemment décrites pourront être utilisées.

De façon plus générale, il est également envisagé un revêtement de sol comprenant :
- une couche d'usure transparente dont la composition est telle que définie dans la revendication 1
- un film imprimé ;
- une couche d'envers dont la composition comprend :
   - du polychlorure de vinyle, de la charge, un plastifiant composé au moins en partie d'un plastifiant polymérique au moins en partie miscible avec le polychlorure de vinyle, avantageusement au moins un agent ignifugeant ;

La couche d'envers, le film imprimé, la couche d'usure étant liés dans cet ordre pour former un revêtement de sol.

De façon alternative, il est également envisagé un revêtement de sol comprenant :
- une couche d'usure sans PVC, par exemple à base de TPU, de ionomère de copolymère d'éthylène et d'acide acrylique tel que le Surlyn commercialisé par la société Dupont, de polyéthylène teréphtalate (PET), d'acide polylactique (PLA) ;
- un film imprimé ;
- une couche d'envers dont la composition est telle que définie dans la revendication 1 est comprend aussi une charge

La couche d'envers, le film imprimé, la couche d'usure étant liés dans cet ordre pour former un revêtement de sol.

## Revendications

1. - Revêtement de sol résistant au trafic pour des véhicules de transport de personnes, comprenant au moins une couche principale dont la composition comprend du polychlorure de vinyle, un plastifiant composé au moins en partie d'un plastifiant polymérique au moins en partie miscible avec le polychlorure de vinyle, ***caractérisé en ce que*** le plastifiant polymérique est choisi parmi l'éthylène / acétate de vinyle / monoxyde de carbone et l'éthylène / acrylate / monoxyde de carbone, ladite composition comprenant entre 1 et 60 PCR de plastifiant non polymérique, la composition comprenant en outre entre 5% et 65% en poids d'agents ignifugeants par rapport au poids de la couche principale, et entre 0,5% et 8% en poids d'agents de synergie et/ou suppresseurs de fumées par rapport au poids de la couche principale.

2. - Revêtement de sol selon la revendication 1, ***caractérisé en ce que*** ladite composition comprend, pour 100 parts en poids de polychlorure de vinyle (PCR), entre 10 et 150 PCR de plastifiant polymérique.

3. - Revêtement de sol selon la revendication 2 , ***caractérisé en ce que*** ladite composition comprend entre 50 et 100 PCR de plastifiant polymérique.

4. - Revêtement de sol selon la revendication 1, ***caractérisé en ce que*** la valeur de température de transition vitreuse (Tg) du plastifiant polymérique est comprise entre -80°C et 0°C et préférentiellement entre -60°C et -15°C.

5. - Revêtement de sol selon la revendication 1, ***caractérisé en ce qu'il*** comprend au moins une couche d'envers liée à la couche principale.

6. - Revêtement de sol selon la revendication 1, ***caractérisé en ce que*** la composition comprend entre 0% et 90% en poids de charge, par rapport au poids de la couche principale, et avantageusement entre 10% et 60% en poids de charge par rapport au poids de la couche principale.

## Patentansprüche

1. Gegen Verkehrsbelastungen widerstandsfähiger Bodenbelag für Fahrzeuge für den Personentransport bestehend aus mindestens einer Hauptschicht, deren Zusammensetzung Polyvinylchlorid enthält, einem Weichmacher, bestehend zumindest zum Teil aus einem polymeren Weichmacher, der zumindest zum Teil mit dem Polyvinylchlorid mischbar ist, ***dadurch gekennzeichnet, dass*** der polymere Weichmacher ausgewählt wird aus Ethylen / Viinylacetat / Kohlenstoffmonoxid und Ethylen / Acrylat / Kohlenstoffmonoxid, diese Zusammensetzung enthält 1 und 60 PCR nicht polymeren Weichmacher, außerdem enthält die Zusammensetzung zwischen 5 und 65 Gewichts-% Flammschutzmittel bezogen auf das Gewicht der Hauptschicht und zwischen 0,5 und 8 Gewichts-% Synergisten und/ oder Rauchhemmer bezogen auf das Gewicht der Hauptschicht.

2. Bodenbelag nach Anspruch 1, ***dadurch gekennzeichnet, dass*** diese Zusammensetzung auf 100 Gewichtsanteile Polyvinylchlorid (PCR), zwischen 10 und 150 PCR polymeren Weichmacher enthält.

3. Bodenbelag nach Anspruch 2, ***dadurch gekennzeichnet, dass*** diese Zusammensetzung zwischen 50 und 100 PCR polymeren Weichmacher enthält.

4. Bodenbelag nach Anspruch 1, ***dadurch gekennzeichnet, dass*** die Glasübergangstemperatur (Tg) des polymeren Weichmachers zwischen -80°C und 0°C liegt, und vorzugsweise zwischen -60°C und -15°C.

5. Bodenbelag nach Anspruch 1, ***dadurch gekennzeichnet, dass*** er mindestens eine Trägerschicht enthält, die mit der Hauptschicht verbunden ist.

6. Bodenbelag nach Anspruch 1, **dadurch gekennzeichnet, dass** die Zusammensetzung zwischen 0 und 90 Gewichts-% Zuschläge enthält, bezogen auf das Gewicht der Hauptschicht, und vorteilhafterweise zwischen 10 und 60 Gewichts-% Zuschläge enthält, bezogen auf das Gewicht der Hauptschicht.

## Claims

1. Traffic-resistant floor covering for people-transporting vehicles, comprising at least one main layer, the composition of which comprises polyvinyl chloride, a plasticizer composed at least partially of a polymeric plasticizer at least partially miscible with polyvinyl chloride, **characterised in that** the polymeric plasticizer is chosen from among ethylene/vinyl acetate/carbon monoxide and ethylene/acrylate/carbon monoxide, said composition comprising between 1 and 60 PCR of non-polymeric plasticizer, the composition further comprising between 5% and 65% by weight of flameproofing agents with respect to the weight of the main layer, and between 0.5% and 8% by weight of synergy agents and/or smoke suppressors with respect to the weight of the main layer.

2. Floor covering according to claim 1, ***characterised in that*** said composition comprises, per 100 parts of polyvinyl chloride (PCR), between 10 and 150 PCR of polymeric plasticizer.

3. Floor covering according to claim 2, ***characterised in that*** said composition comprises between 50 and 100 PCR of polymeric plasticizer.

4. Floor covering according to claim 1, ***characterised in that*** the vitreous transition temperature value (Tg) of the polymeric plasticizer is comprised between -80°C and 0°C and preferably between -60°C and -15°C.

5. Floor covering according to claim 1, ***characterised in that*** it comprises at least one reverse layer connected to the main layer.

6. Floor covering according to claim 1, ***characterised in that*** the composition comprises between 0% and 90% by weight of filler, with respect to the weight of the main layer, and advantageously between 10 % and 60 % by weight of filler with respect to the weight of the main layer.
